# EUROPEAN PATENT APPLICATION

(11) **EP 4 841 780 A1**
(43) Date of publication of application: **18.11.2026**
(21) Application number: 24926828.5
(22) Date of filing: 18.11.2024
(51) Int. Cl.: H01M 50/264

(54) **BATTERY DEVICE AND ENERGY STORAGE DEVICE**

(30) Priority: 29.02.2024 CN 202420390717 U
(71) Applicant: Contemporary Amperex Technology Co., Limited, Ningde, Fujian 352100 (CN)
(72) Inventor: JIN, Qiu, Ningde, Fujian 352100 (CN); TIAN, Maoting, Ningde, Fujian 352100 (CN); LI, Yao, Ningde, Fujian 352100 (CN)
(74) Representative: Kraus & Lederer PartGmbB
(86) International application number: PCT/CN2024/132725
(87) International publication number: WO 2025/179969

(57) **Abstract**

Embodiments of the present application provide a battery device and an energy storage device. The battery device comprises a battery cell assembly and a binding member. The battery cell assembly comprises a plurality of battery cells. The binding member surrounds the battery cell assembly so as to bind the plurality of battery cells. The binding member comprises a metal strip and a first insulating layer. The first insulating layer covers at least part of the outer surface of the metal strip. The first insulating layer is configured to insulate and isolate the metal strip from the battery cells. The material damage temperature of the first insulating layer is greater than or equal to 250°C. By configuring the first insulating layer to cover at least part of the outer surface of the metal strip, the first insulating layer can insulate the metal strip from the battery cell assembly. By setting the material damage temperature of the first insulating layer to be greater than or equal to 250°C, the risk of the melting of the first insulating layer caused by high temperature can be reduced, thereby reducing the risk of an insulation failure between the metal strip and the battery cell assembly, and improving the reliability of the battery device.

## Description

### CROSS-REFERENCE TO RELATED APPLICATIONS

This application claims priority to Chinese Patent Application No. 202420390717.0, filed on February 29, 2024, and entitled "BATTERY, ELECTRICAL DEVICE AND ENERGY STORAGE APPARATUS", the entire content of which is incorporated herein by reference.

### TECHNICAL FIELD

The present application relates to the technical field of batteries, and in particular, to a battery device and an energy storage apparatus.

### BACKGROUND

Energy conservation and emission reduction are key to sustainable development of the automobile industry. Electric vehicles have become an important part of sustainable development of the automobile industry due to their advantages of energy conservation and environmental protection. For electric vehicles, battery technology is an important factor related to their development.

Battery devices are widely used in portable electronic devices, electric transportation vehicles, electric tools, unmanned aerial vehicles, energy storage devices and other fields. In addition to considering the service performance of battery devices, the reliability of battery devices is also an issue that cannot be ignored. Therefore, how to enhance the reliability of battery devices is a technical problem that needs to be solved urgently in battery technology.

### SUMMARY

The present application provides a battery device and an energy storage apparatus, which improve the reliability of the battery device.

According to a first aspect, an embodiment of the present application provides a battery device, including a battery cell assembly and a binding member. The battery cell assembly includes a plurality of battery cells. The binding member is arranged around the battery cell assembly to bind the plurality of battery cells. The binding member includes a metal strip and a first insulation layer. The first insulation layer covers at least a part of an outer surface of the metal strip. The first insulation layer is configured to insulatively separate the metal strip and the battery cells. A material damage temperature of the first insulation layer is greater than or equal to 250°C.

In the above technical solution, by arranging the first insulation layer to cover at least the part of the outer surface of the metal strip, the first insulation layer can insulate the metal strip and the battery cell assembly. By arranging the material damage temperature of the first insulation layer to be greater than or equal to 250°C, the risk of the first insulation layer melting due to high temperature is reduced, thereby reducing the risk of insulation failure between the metal strip and the battery cell assembly, and improving the reliability of the battery device.

In some embodiments, in a cross section of the binding member, the first insulation layer is a non-closed structure extending along a circumferential direction of the metal strip, and the cross section is perpendicular to an extension direction of the binding member. Arranging the first insulation layer as a non-closed structure, on the one hand, facilitates the installation of the first insulation layer and the metal strip, and reduces the installation difficulty of the metal strip and the first insulation layer. On the other hand, the non-closed structure helps to reduce the material usage of the first insulation layer, thereby reducing the manufacturing cost of the battery device.

In some embodiments, in the cross section of the binding member, an opening is formed between two ends of the first insulation layer, and the opening is located on a side of the metal strip facing away from the battery cell assembly. Arranging the opening helps the first insulation layer to cooperate with the metal strip through the opening, and reduces the installation difficulty of the metal strip and the first insulation layer. Moreover, the opening is located on the side of the metal strip facing away from the battery cell, which improves the insulation effect of the first insulation layer on the metal strip and the battery cell assembly, reduces the material usage of the first insulation layer, and reduces the manufacturing cost of the binding member.

In some embodiments, in a cross section of the binding member, the first insulation layer is a closed structure extending along a circumferential direction of the metal strip, and the cross section is perpendicular to an extension direction of the binding member. By arranging the first insulation layer as a closed structure extending along the circumferential direction of the metal strip, the insulation effect of the first insulation layer on the metal strip can be improved, the risk of insulation failure between the metal strip and other components can be reduced, and the reliability of the battery device can be improved.

In some embodiments, the metal strip has a first surface facing towards the battery cell assembly, and the first insulation layer covers a portion of the first surface opposite to the battery cell, the metal strip has a first end and a second end opposite to each other along a width direction of the metal strip, and along the width direction of the metal strip, the first insulation layer exceeds the first end and the second end. In this way, the portion of the first insulation layer exceeding from the metal strip along the width direction of the metal strip can increase the creepage distance between the battery cell and the metal strip, thereby further reducing the risk of insulation failure between the metal strip and the battery cell.

In some embodiments, the metal strip has a second surface facing away from the battery cell assembly. The first insulation layer has two end portions arranged opposite to each other along the width direction of the metal strip, and both of the two end portions are located on the second surface. In this way, on the one hand, the connection between the first insulation layer and the metal strip is more stable, which reduces the risk of the first insulation layer falling off from the metal strip. On the other hand, the first insulation layer increases the creepage distance between the battery cell and the metal strip, which reduces the risk of insulation failure between the metal strip and the battery cell.

In some embodiments, the first insulation layer is an insulation tape wound on the metal strip. This facilitates the installation of the insulation tape and reduces the assembly difficulty between the insulation tape and the metal strip.

In some embodiments, a positive electrode active material of a positive electrode sheet of the battery cell includes lithium phosphate, and a material damage temperature of the first insulation layer is 250°C-500°C. In this way, when thermal runaway occurs in the battery cell whose positive electrode active material is lithium phosphate, the first insulation layer can withstand a high temperature generated by the thermal runaway, thereby reducing the risk of short circuit caused by contact between the metal strip and the battery cell resulting from destruction of the first insulation layer.

In some embodiments, a positive electrode active material of a positive electrode sheet of the battery cell includes LiₐNi_{b}Co_{c}M_{d}OₑA_{f}, where 0<a≤1.2; 0<b<1; 0<c<1; 0<d<1; 1≤e≤2; 0≤f≤1; M includes but is not limited to one or more of Mn, Al, Zr, Zn, Cu, Cr, Mg, Fe, V, Ti and B; A includes but is not limited to one or more of N, F, S and Cl; and a material damage temperature of the first insulation layer is greater than or equal to 400°C. In this way, the first insulation layer has higher heat resistance strength. When thermal runaway occurs in the battery cell, the first insulation layer can withstand high temperature below 400°C, improving the heat resistance capability of the first insulation layer, so that the first insulation layer has a better insulation effect and reduces the risk of short circuit caused by contact between the battery cell and the metal strip.

In some embodiments, a material of the first insulation layer is at least one of ceramic, mica, polyimide and polytetrafluoroethylene. By manufacturing the first insulation layer with ceramic, mica, polyimide and polytetrafluoroethylene, the insulation performance of the first insulation layer and the heat resistance capability of the first insulation layer can be balanced, the insulation effect of the first insulation layer on the metal strip and the battery cell assembly can be improved, and the risk of insulation failure of the first insulation layer caused by damage thereof at high temperature can be reduced.

In some embodiments, the first insulation layer includes a main body layer and a heat-resistant layer that are stacked. The heat-resistant layer is arranged on a side of the main body layer facing away from the metal strip. In this way, the heat-resistant layer can enhance heat resistance strength of the side of the main body layer facing away from the metal strip, and reduce the risk of the first insulation layer being damaged by high temperature from the battery cell assembly, thereby reducing the risk of insulation failure between the metal strip and the battery cell assembly.

In some embodiments, the first insulation layer includes a main body layer and a heat-resistant layer that are stacked. The heat-resistant layer is arranged on a side of the main body layer facing towards the metal strip. In this way, the heat-resistant layer can enhance the side of the main body layer facing towards the metal strip, and reduce the risk of the first insulation layer being damaged by high temperature from the metal strip, thereby reducing the risk of insulation failure between the metal strip and the battery cell assembly.

In some embodiments, the first insulation layer includes a main body layer and a heat-resistant layer that are stacked. The heat-resistant layer is arranged on a side of the main body layer facing away from the metal strip; and the heat-resistant layer is arranged on a side of the main body layer facing towards the metal strip. In this way, the heat-resistant layer can enhance the resistance of the first insulation layer to high temperature of the metal strip and high temperature of the battery cell assembly, and reduce the risk of insulation failure between the metal strip and the battery cell assembly.

In some embodiments, a material of the heat-resistant layer is ceramic silicone rubber; and/or a material of the main body layer is glass fiber cloth. By arranging the material of the heat-resistant layer as ceramic silicone rubber, the insulation performance and heat resistance performance between the metal strip and the battery cell assembly can be enhanced. By arranging the material of the main body layer as glass fiber cloth, the glass fiber cloth can improve the insulation performance of the first insulation layer, and the glass fiber cloth, as a carrier of the heat-resistant layer, makes the arrangement of the heat-resistant layer more stable. The glass fiber cloth can also provide good toughness for the first insulation layer and reduce the risk of the first insulation layer being damaged.

In some embodiments, a thickness of the first insulation layer is 0.15mm-1mm. When the thickness of the first insulation layer is greater than or equal to 0.15mm, the insulation performance of the first insulation layer can be improved and the risk of insulation failure between the battery cell assembly and the metal strip can be reduced. When the thickness of the first insulation layer is less than or equal to 1mm, the size of the binding member can be reduced, the space occupied by the binding member in the battery cell assembly can be reduced, and the volumetric energy density of the battery device can be improved. Therefore, when the thickness of the first insulation layer is 0.15mm-1mm, the improvement of the insulation performance of the first insulation layer and the reduction of the size of the binding member can be balanced, thereby reducing the risk of insulation failure between the battery cell assembly and the metal strip and improving the volumetric energy density of the battery device.

In some embodiments, the thickness of the first insulation layer is 0.15mm-0.5mm. When the thickness of the first insulation layer is less than or equal to 0.5mm, the size of the binding member can be further reduced, the space occupied by the binding member in the battery cell assembly can be reduced, and the volumetric energy density of the battery device can be improved. Therefore, when the thickness of the first insulation layer is 0.15mm-0.5mm, the insulation performance of the first insulation layer can be further improved and the size of the binding member can be further reduced, thereby further reducing the risk of insulation failure between the battery cell assembly and the metal strip and improving the volumetric energy density of the battery device.

In some embodiments, the first insulation layer is bonded to the metal strip. In this way, the connection between the first insulation layer and the metal strip is more stable, which improves the structural stability of the binding member.

In some embodiments, the binding member further includes a second insulation layer, and the second insulation layer covers at least a part of an outer surface of the first insulation layer. In this way, the first insulation layer can further improve the insulation effect between the metal strip and the battery cell assembly, and the second insulation layer can also restrain the position of the first insulation layer to improve the structural stability of the first insulation layer.

In some embodiments, the second insulation layer is a tubular member, and both the metal strip and the first insulation layer are located inside the tubular member. Arranging the second insulation layer as a tubular member is convenient to install the second insulation layer and also helps to fix the first insulation layer on the outer surface of the metal strip.

In some embodiments, the second insulation layer is a heat shrinkable tube. In this way, the installation of the second insulation layer is more convenient and the assembly cost of the second insulation layer is reduced.

In some embodiments, the material damage temperature of the first insulation layer is greater than a material damage temperature of the second insulation layer. In this way, the first insulation layer can withstand a higher temperature than the second insulation layer. When the second insulation layer is damaged by heat, the first insulation layer can reduce the risk of insulation failure between the battery cell and the metal strip and improve the reliability of the battery device.

According to a second aspect, an embodiment of the present application provides an energy storage apparatus, including the battery device provided in any one of the embodiments of the first aspect.

The above description is only an overview of the technical solutions of the present application. In order to understand the technical means of the present application more clearly, the present application can be implemented in accordance with the content of the description. In order to make the above and other objects, features and advantages of the present application more obvious and understandable, the specific embodiments of the present application are specifically listed below.

### BRIEF DESCRIPTION OF DRAWINGS

In order to illustrate the technical solutions of the embodiments of the present application more clearly, the drawings required to be used in the embodiments of the present application will be briefly introduced below. Obviously, the drawings described below are only some embodiments of the present application. For those of ordinary skill in the art, other drawings can be obtained based on the drawings without creative work.
FIG. 1 is a schematic structural diagram of a vehicle provided by some embodiments of the present application;
FIG. 2 is an exploded view of a battery device provided by some embodiments of the present application;
FIG. 3 is a schematic structural diagram of a battery device provided by some embodiments of the present application;
FIG. 4 is a schematic structural diagram of a binding member provided by some embodiments of the present application;
FIG. 5 is a cross-sectional view taken along line A-A in FIG. 4;
FIG. 6 is a schematic structural diagram of a binding member provided by further embodiments of the present application;
FIG. 7 is a schematic structural diagram (showing an insulation tape) of a binding member provided by some embodiments of the present application;
FIG. 8 is a schematic structural diagram of a battery device provided by further embodiments of the present application;
FIG. 9 is a schematic structural diagram of a battery device provided by still further embodiments of the present application;
FIG. 10 is a schematic structural diagram of a battery device provided by other embodiments of the present application; and
FIG. 11 is a schematic structural diagram of a binding member provided by still further embodiments of the present application.

In the drawings, the drawings are not drawn to actual scale.

Reference signs: 1. metal strip; 11. first surface; 12. second surface; 13. first end; 14. second end; 2. first insulation layer; 21. end portion; 22. opening; 23. main body layer; 24. heat-resistant layer; 25. insulation tape; 3. second insulation layer; 10. binding member; 20. battery cell assembly; 201. battery cell; 30. box; 301. first box body; 302. second box body; 100. battery device; 200. controller; 300. motor; 1000. vehicle; X. first direction; and Y. second direction.

### DESCRIPTION OF EMBODIMENTS

The embodiments of the present application will be further described in detail below with reference to the drawings and examples. The detailed description of the following embodiments and the drawings are used to exemplarily illustrate the principles of the present application, but cannot be used to limit the scope of the present application, that is, the present application is not limited to the described embodiments.

Unless otherwise defined, all technical and scientific terms used herein have the same meaning as commonly understood by those skilled in the technical field of the present application. The terms used herein are only for the purpose of describing specific embodiments and are not intended to limit the present application. The terms "include" and "have" and any variations thereof in the description and claims of the present application and the above drawings are intended to cover non-exclusive inclusion.

In the description of the embodiments of the present application, the technical terms "first", "second", and the like are only used to distinguish different objects, and cannot be understood as indicating or implying relative importance or implicitly indicating the number, specific order or primary-secondary relationship of the indicated technical features.

The reference to "embodiment" herein means that a specific feature, structure or characteristic described in conjunction with the embodiment may be included in at least one embodiment of the present application. The appearance of the phrase in various positions in the description does not necessarily refer to the same embodiment, nor is it an independent or alternative embodiment that is mutually exclusive with other embodiments. It is explicitly and implicitly understood by those skilled in the art that the embodiments described herein can be combined with other embodiments.

In the description of the embodiments of the present application, the term "plurality" refers to two or more (including two). Similarly, "a plurality of groups" refers to two or more groups (including two groups), and "a plurality of sheets" refers to two or more sheets (including two sheets), unless otherwise clearly and specifically limited.

In the description of the embodiments of the present application, unless otherwise clearly specified and limited, the technical terms "install", "connect", "link", "fix" and other terms should be understood in a broad sense. For example, it can be a fixed connection, a detachable connection, or an integral connection. It can be a mechanical connection or an electrical connection. It can be a direct connection or an indirect connection through an intermediate medium, and it can be the internal communication of two elements or the interaction relationship between two elements. For those of ordinary skill in the art, the specific meanings of the above terms in the embodiments of the present application can be understood according to specific circumstances.

The " a plurality of" appearing in the present application refers to two or more (including two). Similarly, "a plurality of groups" refers to two or more groups (including two groups), and "a plurality of sheets" refers to two or more sheets (including two sheets).

In the embodiments of the present application, the battery cell may be a secondary battery. A secondary battery refers to a battery cell that can be recharged after the battery cell is discharged, so as to activate an active material for continued use.

Battery cells include but are not limited to lithium-ion batteries, sodium-ion batteries, sodium-lithium-ion batteries, lithium metal batteries, sodium metal batteries, lithium-sulfur batteries, magnesium-ion batteries, nickel-hydrogen batteries, nickel-cadmium batteries, lead-acid batteries, and the like.

In some embodiments, the battery cell includes a housing, and the housing is configured to package the electrode assembly, electrolyte and other components. The housing may be a steel shell, an aluminum shell, a composite metal shell (such as a copper-aluminum composite shell), or the like.

As an example, the battery cell may be a cylindrical battery cell, a prismatic battery cell, a pouch battery cell or a battery cell of other shapes. The prismatic battery cell includes a square-shell battery cell, a blade-shaped battery cell, and a multi-prismatic battery cell. The multi-prismatic battery cell is, for example, a hexagonal-prism battery cell or the like.

The battery device (Battery device) mentioned in the embodiments of the present application may include one or more battery cell assemblies for providing voltage and capacity. The battery cell assembly (Battery Cell Assembly) may include a plurality of battery cells, and the plurality of battery cells are connected in series, parallel or mixed connection through busbar components.

In some embodiments, the battery cell assembly (Battery Cell Assembly) is usually formed by arranging a plurality of battery cells. As an example, the battery cell assembly may be a battery module (Battery Module), and the battery module is formed by arranging and fixing a plurality of battery cells to form an independent module.

As an example, the battery module may be formed by binding a plurality of battery cells with straps.

In some embodiments, the battery device may be a battery pack (battery Pack). The battery pack may include a box and one or more battery cell assemblies. The battery cell assemblies are accommodated in the box.

As an example, the battery cell assembly may be a battery module, and the battery cell assembly may be accommodated in the box by fixing the battery module in the box.

As an example, the battery cell assembly may alternatively be accommodated in the box by directly fixing a plurality of battery cells in the box.

As an example, the box may include a first box body and a second box body. The first box body and the second box body are fitted with each other so that a closed space is formed inside the box to accommodate the battery cell assembly. The closure here refers to covering or closing, which may be sealed or unsealed. The first box body may be a top cover or a bottom plate.

As an example, the box may include a top cover, a frame and a bottom plate. The top cover and the bottom plate are respectively connected to the frame so that a closed space is formed inside the box to accommodate the battery cell assembly.

As an example, the box may be used as a part of a chassis structure of a vehicle. For example, the top cover of the box may become at least a part of a floor of the vehicle, or the frame of the box may become at least a part of a cross member and longitudinal rail of the vehicle.

In some embodiments, the battery device refers to an energy storage apparatus. The energy storage apparatus includes a box, and at least one side of the box is provided with a door. The energy storage apparatus includes an energy storage container, an energy storage cabinet, or the like.

In battery technology, a plurality of battery cells can be connected in series, parallel or mixed to form a battery cell assembly to obtain higher voltage and capacity. In order to stabilize the structure of the battery cell assembly, a plurality of battery cells can be bound together by a binding member, thereby facilitating the placement and installation of the battery cell assembly. In order to improve the strength of the binding member and reduce the volume of the binding member, the binding member is usually made of metal parts. However, when the binding member binds battery cells with a metal shell, the metal part of the binding member is prone to come into contact with the metal shell of the battery cell, thereby increasing the risk of short circuit of the battery cell.

An insulation layer can be arranged on the metal material of the binding member, and the insulation performance between the metal material of the binding member and the battery cell assembly can be improved through the insulation layer. However, the battery cell assembly is prone to generate heat during use, and when the battery device is stored in a high-temperature environment, high temperature is prone to cause the insulation layer of the binding member to be damaged, thereby causing the risk of insulation failure between the metal material of the binding member and the battery cell assembly, and reducing the reliability of the battery device.

In view of this, in order to improve the reliability of the battery device, an embodiment of the present application provides a battery device, including a battery cell assembly and a binding member. The battery cell assembly includes a plurality of battery cells. The binding member is arranged around the battery cell assembly to bind the plurality of battery cells. The binding member includes a metal strip and a first insulation layer. The first insulation layer covers at least a part of an outer surface of the metal strip. The first insulation layer is configured to insulatively separate the metal strip and the battery cells. A material damage temperature of the first insulation layer is greater than or equal to 250°C.

In such a battery device, by arranging the first insulation layer to cover at least the part of the outer surface of the metal strip, the first insulation layer can insulate the metal strip and the battery cell assembly. By arranging the material damage temperature of the first insulation layer to be greater than or equal to 250°C, the risk of the first insulation layer melting due to high temperature is reduced, thereby reducing the risk of insulation failure between the metal strip and the battery cell assembly, and improving the reliability of the battery device.

The binding member described in the embodiments of the present application is suitable for battery devices and electrical devices using battery devices.

The electrical device may be a vehicle, a mobile phone, a portable device, a laptop computer, a ship, a spacecraft, an electric toy, an electric tool, or the like. The vehicle may be a fuel vehicle, a gas vehicle or a new energy vehicle. The new energy vehicle may be a battery electric vehicle, a hybrid vehicle, an extended-range vehicle, or the like. The spacecraft includes an airplane, a rocket, a space shuttle, a spacecraft, or the like. The electric toy includes a fixed or mobile electric toy, such as a game console, a toy electric car, a toy electric boat, a toy electric airplane, or the like. The electric tool includes a metal cutting electric tool, a grinding electric tool, an assembly electric tool and a railway electric tool, such as an electric drill, an electric grinder, an electric wrench, an electric screwdriver, an electric hammer, an impact drill, a concrete vibrator, an electric planer, or the like.

For the convenience of description, the following embodiments are described by using the electrical device being a vehicle as an example.

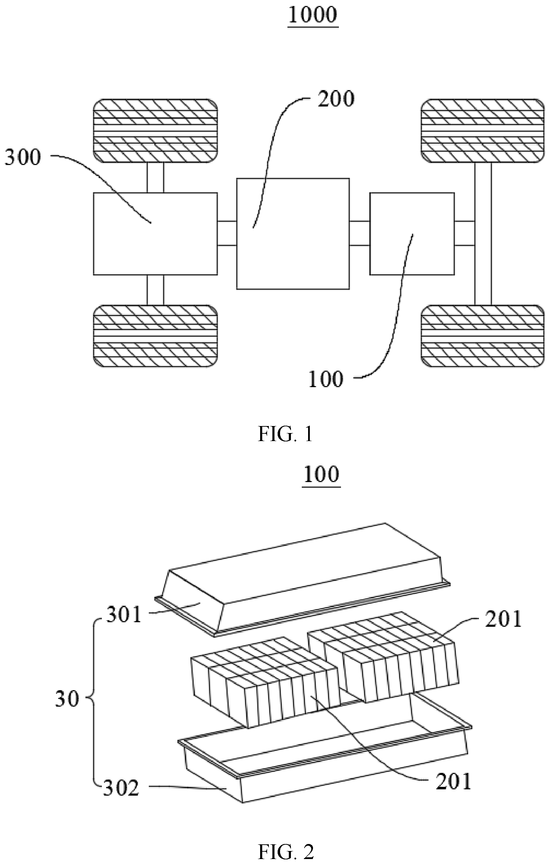

Referring to FIG. 1, FIG. 1 is a schematic structural diagram of a vehicle 1000 provided by some embodiments of the present application. A battery device 100 is arranged inside the vehicle 1000. The battery device 100 may be arranged at the bottom, head or tail of the vehicle 1000. The battery device 100 may be configured to supply power to the vehicle 1000. For example, the battery device 100 may be used as an operating power source of the vehicle 1000.

The vehicle 1000 may further include a controller 200 and a motor 300. The controller 200 is configured to control the battery device 100 to supply power to the motor 300, for example, to meet the working power requirements of the vehicle 1000 during starting, navigation and driving.

In some embodiments of the present application, the battery device 100 can not only be used as an operating power source of the vehicle 1000, but also as a driving power source of the vehicle 1000, replacing or partially replacing fuel or natural gas to provide driving power for the vehicle 1000.

Referring to FIG. 2, FIG. 2 is an exploded view of a battery device 100 provided by some embodiments of the present application. The battery device 100 may include a box 30 and a battery cell 201. The box 30 is configured to accommodate the battery cell 201.

The box 30 has a closed space formed inside for accommodating the battery cell 201. The box 30 may adopt various structures. In some embodiments, the box 30 may include a first box body 301 and a second box body 302. The first box body 301 and the second box body 302 are fitted to each other. The first box body 301 and the second box body 302 may have various shapes, such as a cuboid or a cylinder. The first box body 301 may be a hollow structure with one side open, and the second box body 302 may also be a hollow structure with one side open. The open side of the second box body 302 and the open side of the first box body 301 are fitted to each other to form the box 30 with a closed space. It may alternatively be that the first box body 301 is a hollow structure with one side open, and the second box body 302 is a plate-like structure. The second box body 302 is fitted to the open side of the first box body 301 to form the box 30 with an accommodating space.

In the battery device 100, a plurality of battery cells 201 are provided. The plurality of battery cells 201 may be connected in series, parallel or mixed connection. Mixed connection means that there are both series and parallel connections among the plurality of battery cells 201. The plurality of battery cells 201 may first be connected in series, parallel or mixed to form a battery module, and then a plurality of battery modules may be connected in series, parallel or mixed to form a whole, and accommodated in the box 30. All battery cells 201 may alternatively be directly connected in series, parallel or mixed, and then the whole formed by all battery cells 201 may be accommodated in the box 30.

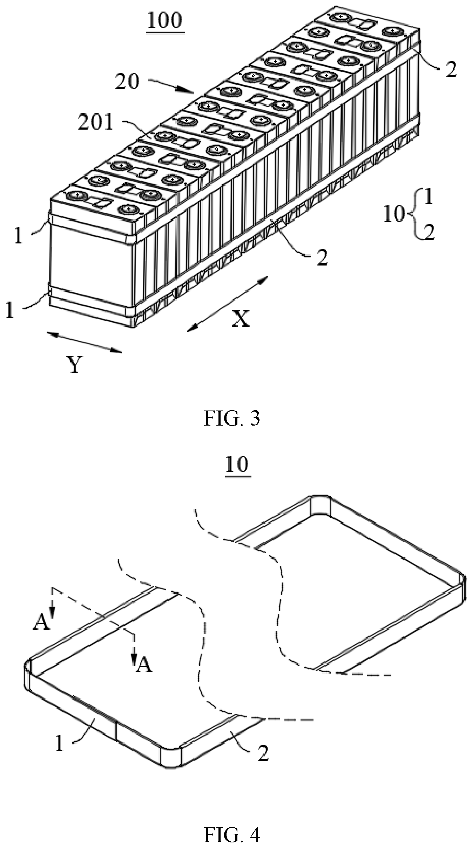

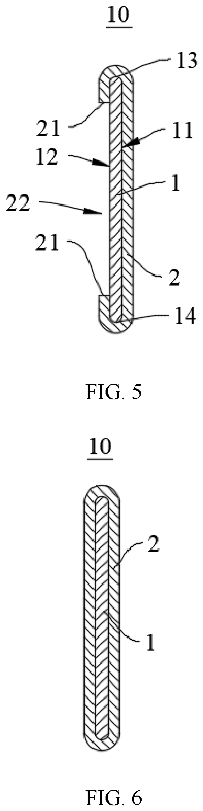

Referring to FIG. 3 to FIG. 5, FIG. 3 is a schematic structural diagram of a battery device 100 provided by some embodiments of the present application. FIG. 4 is a schematic structural diagram of a binding member 10 provided by some embodiments of the present application. FIG. 5 is a cross-sectional view taken along line A-A in FIG. 4. An embodiment of the present application provides a battery device 100, including a battery cell assembly 20 and a binding member 10. The battery cell assembly 20 includes a plurality of battery cells 201. The binding member 10 is arranged around the battery cell assembly 20 to bind the plurality of battery cells 201. The binding member 10 includes a metal strip 1 and a first insulation layer 2. The first insulation layer 2 covers at least a part of an outer surface of the metal strip 1. The first insulation layer 2 is configured to insulatively separate the metal strip 1 and the battery cells 201. A material damage temperature of the first insulation layer 2 is greater than or equal to 250°C.

The battery device 100 may include one battery cell assembly 20, or may include a plurality of battery cell assemblies 20. Each battery cell assembly 20 has a binding member 10 to restrain the position of battery cells 201 of the battery cell assembly 20.

The battery cell assembly 20 includes a plurality of battery cells 201. The plurality of battery cells 201 may be stacked along the same direction to form a row of battery cell assemblies 20, and the binding member 10 binds the row of battery cell assemblies 20. The plurality of battery cells 201 may alternatively be arranged in a plurality of rows and columns to form a cluster of battery cell assemblies 20, and the binding member 10 binds the cluster of battery cell assemblies 20. The number of battery cells 201 in each row and each column may be equal or unequal.

One or more binding members 10 may be provided. The binding member 10 may be in contact with each battery cell 201 in the battery cell assembly 20 to restrain the position of the battery cells 201. The binding member 10 may alternatively be in contact with only some of the battery cells 201 in the battery cell assembly 20, and the battery cells 201 press against each other, so that the binding member 10 restrains the positions of the battery cells 201. In an embodiment where a plurality of binding members 10 are provided, the plurality of binding members 10 may be arranged spaced apart or crosswise.

The metal strip 1 of the binding member 10 is a strip-shaped structure arranged around the battery cell assembly 20. At least a part of the first insulation layer 2 is arranged between the metal strip 1 and the battery cell assembly 20 to insulatively separate the metal strip 1 and the battery cells 201. It may be that the first insulation layer 2 covers only a part of the outer surface of the metal strip 1 or the first insulation layer 2 covers the entire outer surface of the metal strip 1.

The material damage temperature of the first insulation layer 2 is a melting point of the first insulation layer 2 or a thermal decomposition temperature of the first insulation layer 2. In an embodiment where the material of the first insulation layer 2 has only a melting point, the material damage temperature of the first insulation layer 2 is the melting point of the first insulation layer 2. In an embodiment where the material of the first insulation layer 2 has only a thermal decomposition temperature, the material damage temperature of the first insulation layer 2 is the thermal decomposition temperature of the first insulation layer 2. When the material of the first insulation layer 2 has both a melting point and a thermal decomposition temperature, the lower one of values of the melting point and the thermal decomposition temperature of the first insulation layer 2 is the material damage temperature of the first insulation layer 2.

The material damage temperature of the first insulation layer 2 may be 250°C, 300°C, 350°C, 400°C, 450°C, 500°C, 550°C, 600°C, 650°C, 700°C, 750°C, 800°C, 850°C, 900°C, 950°C, 1000°C, 1050°C, 1100°C, 1200°C, 1300°C, 1400°C, 1500°C, 1600°C, 1700°C, 1800°C, 2000°C, or the like.

In the embodiments of the present application, by arranging the first insulation layer 2 to cover at least a part of the outer surface of the metal strip 1, the first insulation layer 2 can insulate the metal strip 1 and the battery cell assembly 20. When thermal runaway occurs in the battery device 100, the binding.

In some embodiments, still referring to FIG. 3 to FIG. 5, in a cross section of the binding member 10, the first insulation layer 2 is a non-closed structure extending along a circumferential direction of the metal strip 1, and the cross section is perpendicular to an extension direction of the binding member 10.

The binding member 10 is a strip-shaped structure, and the cross section of the binding member 10 is perpendicular to the extension direction of the strip-shaped structure. For example, as shown in FIG. 3, the battery cell assembly 20 includes a plurality of battery cells 201 arranged along the first direction X, a largest side of each battery cell 201 is perpendicular to the first direction X, and the binding member 10 binds the plurality of battery cells 201. The binding member 10 includes a first portion extending along the first direction X and a second portion extending along a second direction Y. The largest side of the battery cell 201 faces towards the second portion. A cross section of the first portion of the binding member 10 is perpendicular to the first direction X, and a cross section of the second portion of the binding member 10 is perpendicular to the second direction Y, where the first direction X is perpendicular to the second direction Y.

On the cross section of each binding member 10, the first insulation layer 2 is a non-closed structure extending along the circumferential direction of the metal strip 1. The non-closed structure means that the first insulation layer 2 has two end portions 21 on the cross section, and the two end portions 21 are spaced apart so that the two end portions 21 do not come into contact with each other, thereby forming a non-closed structure of the first insulating member on the cross section. The non-closed structure of the first insulation layer 2 may alternatively be located on the side of the metal strip 1 facing towards the battery cell 201, or the non-closed structure of the first insulation layer 2 may be located on the side of the metal strip 1 facing away from the battery cell 201. Since the cross section of the first insulating member may be contiguous, the non-closed structure of the first insulating member may also be contiguous.

In this embodiment, arranging the first insulation layer 2 as a non-closed structure, on the one hand, facilitates the installation of the first insulation layer 2 and the metal strip 1, and reduces the installation difficulty of the metal strip 1 and the first insulation layer 2. On the other hand, the non-closed structure helps to reduce the material usage of the first insulation layer 2, thereby reducing the manufacturing cost of the battery device 100.

In some embodiments, still referring to FIG. 5, in the cross section of the binding member 10, an opening 22 is formed between two ends of the first insulation layer 2, and the opening 22 is located on a side of the metal strip 1 facing away from the battery cell assembly 20.

The two end portions 21 of the first insulation layer 2 are located on the same side of the metal strip 1, so that the opening 22 is formed between the two end portions 21. It can be understood that the two end portions 21 of the opening 22 are located on the side of the metal strip 1 facing away from the battery cell assembly 20.

Arranging the opening 22 helps the first insulation layer 2 to cooperate with the metal strip 1 through the opening 22, and reduces the installation difficulty of the metal strip 1 and the first insulation layer 2. Moreover, the opening 22 is located on the side of the metal strip 1 facing away from the battery cell 201, which improves the insulation effect of the first insulation layer 2 on the metal strip 1 and the battery cell assembly 20, reduces the material usage of the first insulation layer 2, and reduces the manufacturing cost of the binding member 10.

In some embodiments, still referring to FIG. 5, the metal strip 1 has a first surface 11 facing towards the battery cell assembly 20, and the first insulation layer 2 covers a portion of the first surface 11 opposite to the battery cell 201. The metal strip 1 has a first end 13 and a second end 14 opposite to each other along a width direction of the metal strip 1. Along the width direction of the metal strip 1, the first insulation layer 2 exceeds the first end 13 and the second end 14.

It may be that in the cross section of the binding member 10, along the thickness direction of the metal strip 1, the first insulation layer 2 covers the entire first surface 11. The first surface 11 is an inner surface of the metal strip 1. The first surface 11 may have a facing portion facing towards the battery cell 201 and a transition portion connecting the facing portion with the first end 13 or connecting the facing portion with the second end 14. The facing portion is a portion of the first surface 11 opposite to the battery cell 201, and the first insulation layer 2 covers the facing portion. The first insulation layer 2 may cover the transition portion or may not cover the transition portion.

The first insulation layer 2 protrudes from the first end 13 in a direction from the second end 14 toward the first end 13, and the first insulation layer 2 exceeds the second end 14 in a direction from the first end 13 toward the second end 14.

In this embodiment, the portion of the first insulation layer 2 exceeding the metal strip 1 along the width direction of the metal strip 1 can increase the creepage distance between the battery cell 201 and the metal strip 1, thereby further reducing the risk of insulation failure between the metal strip 1 and the battery cell 201.

In some embodiments, still referring to FIG. 5, the metal strip 1 has a second surface 12 facing away from the battery cell assembly 20. The first insulation layer 2 has two end portions arranged opposite to each other along the width direction of the metal strip 1, and both of the two end portions are located on the second surface 12.

The first surface 11 and the second surface 12 are two surfaces arranged opposite to each other in the thickness direction of the metal strip 1. The second surface 12 is an outer surface of the metal strip 1. The first insulation layer 2 wraps the first surface 11, the first end 13 and the second end 14, and extends to the second surface 12.

In this embodiment, on the one hand, the connection between the first insulation layer 2 and the metal strip 1 is more stable, which reduces the risk of the first insulation layer 2 falling off from the metal strip 1. On the other hand, the first insulation layer 2 increases the creepage distance between the battery cell 201 and the metal strip 1, which reduces the risk of insulation failure between the metal strip 1 and the battery cell 201.

In some embodiments, referring to FIG. 6, FIG. 6 is a schematic structural diagram of a binding member 10 provided by further embodiments of the present application. In a cross section of the binding member 10, the first insulation layer 2 is a closed structure extending along a circumferential direction of the metal strip 1, and the cross section is perpendicular to an extension direction of the binding member 10.

It can be understood that the first insulation layer 2 covers the entire metal strip 1, so that on the cross section of each binding member 10, the first insulation layer 2 can cover the entire metal strip 1, and the first insulation layer 2 forms a closed structure extending along the circumferential direction of the metal strip 1 on the cross section.

By arranging the first insulation layer 2 as a closed structure extending along the circumferential direction of the metal strip 1, the insulation effect of the first insulation layer 2 on the metal strip 1 can be improved, the risk of insulation failure between the metal strip 1 and other components can be reduced, and the reliability of the battery device 100 can be improved.

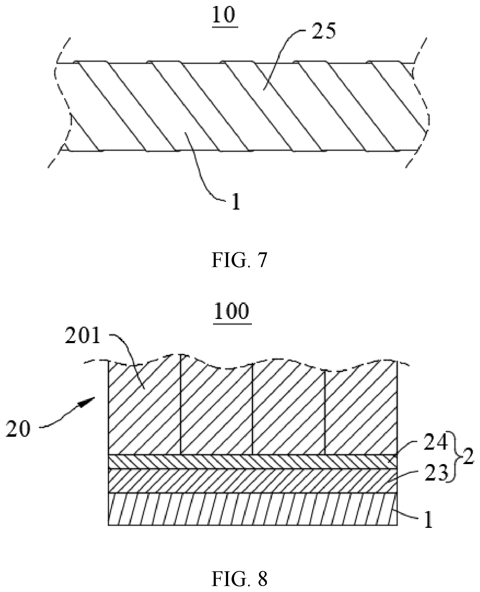

In some embodiments, referring to FIG. 7, FIG. 7 is a schematic structural diagram (showing an insulation tape 25) of a binding member 10 provided by some embodiments of the present application. The first insulation layer 2 is an insulation tape 25 wound on the metal strip 1.

The insulation tape 25 may wind only a part of the metal strip 1. For example, the battery cell assembly 20 includes a plurality of battery cells 201 arranged along the first direction X, the binding member 10 includes a first portion extending along the first direction X, and the insulation tape 25 winds only the entire metal strip 1 located in the first portion. For another example, the insulation tape 25 is spirally wound on the metal strip 1, so that the insulation tape 25 forms a first winding region and a second winding region on the side of the metal strip 1 facing away from the battery cell assembly 20, and the first winding region and the second winding region are spaced apart, so that the insulation tape 25 winds only a part of the metal strip 1. The insulation tape 25 may alternatively wind the entire metal strip 1 to completely cover the metal strip 1. The insulation tape 25 may partially overlap or may not overlap.

In this embodiment, arranging the first insulation layer 2 as the insulation tape 25 wound on the metal strip 1 facilitates the installation of the insulation tape 25 and reduces the assembly difficulty between the insulation tape 25 and the metal strip 1.

In some embodiments, a positive electrode active material of a positive electrode sheet of the battery cell 201 includes lithium phosphate, and a material damage temperature of the first insulation layer 2 is 250°C-400°C.

The positive electrode active material may include at least one of lithium iron phosphate (such as LiFePO₄ (LFP for short)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

The material damage temperature of the first insulation layer 2 may be a point value of any one of 250°C, 260°C, 270°C, 280°C, 290°C, 300°C, 310°C, 320°C, 330°C, 340°C, 350°C, 360°C, 370°C, 380°C, 390°C, 400°C, 410°C, 420°C, 430°C, 440°C, 450°C, 460°C, 470°C, 480°C, 490°C, 500°C or a range value between any two of them.

In this embodiment, when thermal runaway occurs in the battery cell 201 whose positive electrode active material is lithium phosphate, the first insulation layer 2 can withstand a high temperature generated by the thermal runaway, thereby reducing the risk of short circuit caused by contact between the metal strip 1 and the battery cell 201 resulting from destruction of the first insulation layer 2.

In some embodiments, a positive electrode active material of a positive electrode sheet of the battery cell 201 includes LiₐNi_{b}Co_{c}M_{d}OₑA_{f}, where 0<a≤1.2; 0<b<1; 0<c<1; 0<d<1; 1≤e≤2; 0≤f≤1; M includes but is not limited to one or more of Mn, Al, Zr, Zn, Cu, Cr, Mg, Fe, V, Ti and B; A includes but is not limited to one or more of N, F, S and Cl; and a material damage temperature of the first insulation layer 2 is greater than or equal to 400°C.

The positive electrode active material may include at least one of LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), LiNi_{0.8}Co_{0.1}Mn_{0.1}O₂ (NCM₈₁₁ for short), and lithium nickel cobalt aluminum oxide (such as LiNi_{0.85}Co_{0.15}Al_{0.05}O₂).

The material damage temperature of the first insulation layer 2 may be 400°C, 450°C, 500°C, 550°C, 600°C, 650°C, 700°C, 750°C, 800°C, 850°C, 900°C, 950°C, 1000°C, 1050°C, 1100°C, 1200°C, 1300°C, 1250°C, 1500°C, 1600°C, 1700°C, 1800°C, 2000°C, or the like.

In this embodiment, the first insulation layer 2 has higher heat resistance strength. When thermal runaway occurs in the battery cell 201, the first insulation layer 2 can withstand high temperature below 400°C, improving the heat resistance capability of the first insulation layer 2, so that the first insulation layer 2 has a better insulation effect and reduces the risk of short circuit caused by contact between the battery cell 201 and the metal strip 1.

In some embodiments, a material of the first insulation layer 2 is at least one of ceramic, mica, polyimide and polytetrafluoroethylene.

The material of the first insulation layer 2 may be one of ceramic, mica, polyimide or polytetrafluoroethylene. For example, the material of the first insulation layer 2 is ceramic, and the melting point of the first insulation layer 2 is greater than 250°C. It may also be a combination of a plurality of ceramic, mica, polyimide and polytetrafluoroethylene. For example, the first insulation layer 2 is a combination of polyimide and polytetrafluoroethylene, polyimide is arranged to cover polytetrafluoroethylene, and the thermal damage temperature of the first insulation layer 2 is greater than or equal to 250°C.

By manufacturing the first insulation layer 2 with ceramic, mica, polyimide and polytetrafluoroethylene, the insulation performance of the first insulation layer 2 and the heat resistance capability of the first insulation layer 2 can be balanced, the insulation effect of the first insulation layer 2 on the metal strip 1 and the battery cell assembly 20 can be improved, and the risk of insulation failure of the first insulation layer 2 caused by damage thereof at high temperature can be reduced.

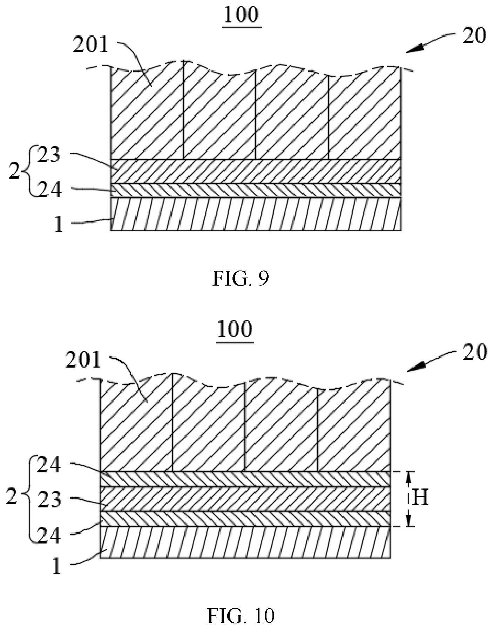

In some embodiments, referring to FIG. 8 to FIG. 10, FIG. 8 is a schematic structural diagram of a battery device 100 provided by further embodiments of the present application. FIG. 9 is a schematic structural diagram of a battery device 100 provided by still further embodiments of the present application. FIG. 10 is a schematic structural diagram of a battery device 100 provided by other embodiments of the present application. The first insulation layer 2 includes a main body layer 23 and a heat-resistant layer 24 that are stacked. The heat-resistant layer 24 is arranged on a side of the main body layer 23 facing away from the metal strip 1.

The main body layer 23 is closer to the metal strip 1 than the heat-resistant layer 24. It can be understood that the material damage temperatures of both the main body layer 23 and the heat-resistant layer 24 are greater than or equal to 250°C.

In this embodiment, by arranging the first insulation layer 2 to include the main body layer 23 and heat-resistant layer 24 that are stacked, and arranging the heat-resistant layer 24 on the side of the main body layer 23 facing away from the metal strip 1, the heat-resistant layer 24 can enhance the heat resistance strength of the side of the main body layer 23 facing away from the metal strip 1, and reduce the risk of the first insulation layer 2 being damaged by high temperature from the battery cell assembly 20, thereby reducing the risk of insulation failure between the metal strip 1 and the battery cell assembly 20.

In some embodiments, still referring to FIG. 9, the first insulation layer 2 includes a main body layer 23 and a heat-resistant layer 24 that are stacked. The heat-resistant layer 24 is arranged on a side of the main body layer 23 facing towards the metal strip 1.

The heat-resistant layer 24 is closer to the metal strip 1 than the main body layer 23.

In this embodiment, the heat-resistant layer 24 can enhance the side of the main body layer 23 facing towards the metal strip 1, and reduce the risk of the first insulation layer 2 being damaged by high temperature from the metal strip 1, thereby reducing the risk of insulation failure between the metal strip 1 and the battery cell assembly 20.

In some embodiments, still referring to FIG. 10, the first insulation layer 2 includes a main body layer 23 and a heat-resistant layer 24 that are stacked. The heat-resistant layer 24 is arranged on a side of the main body layer 23 facing away from the metal strip 1. The heat-resistant layer 24 is arranged on a side of the main body layer 23 facing towards the metal strip 1.

In this embodiment, the heat-resistant layer 24 can enhance the resistance of the first insulation layer 2 to high temperature of the metal strip 1 and high temperature of the battery cell assembly 20, and reduce the risk of insulation failure between the metal strip 1 and the battery cell assembly 20.

In some embodiments, a material of the heat-resistant layer 24 is ceramic silicone rubber.

Ceramic silicone rubber is a composite material of ceramic and silicone rubber. A melting point of the ceramic silicone rubber is greater than 250°C, and the ceramic silicone rubber has good insulation performance.

In some embodiments, a material of the main body layer 23 is glass fiber cloth. Glass fiber cloth is a composite material of glass fiber and resin matrix. A melting point of glass fiber cloth is greater than 250°C, and the glass fiber cloth also has good insulation performance.

In some embodiments, a material of the heat-resistant layer 24 is ceramic silicone rubber, and a material of the main body layer 23 is glass fiber cloth.

By arranging the material of the heat-resistant layer 24 as ceramic silicone rubber, the insulation performance and heat resistance performance between the metal strip 1 and the battery cell assembly 20 can be enhanced. By arranging the material of the main body layer 23 as glass fiber cloth, the glass fiber cloth can improve the insulation performance of the first insulation layer 2, and the glass fiber cloth, as a carrier of the heat-resistant layer 24, makes the arrangement of the heat-resistant layer 24 more stable. The glass fiber cloth can also provide good toughness for the first insulation layer 2 and reduce the risk of the first insulation layer 2 being damaged.

In some embodiments, still referring to FIG. 10, a thickness of the first insulation layer 2 is 0.15mm-1mm.

The thickness of the first insulation layer 2 is a maximum thickness of the first insulation layer 2 covering the outer surface of the metal strip 1. In an embodiment where the first insulation layer 2 is an insulation tape 25, the insulation tape 25 is partially overlapped, and the thickness of the first insulation layer 2 is the thickness of a non-overlapping portion of the insulation tape 25. The thickness of the first insulation layer 2 is H. H may be a point value of any one of 0.15mm, 0.2mm, 0.25mm, 0.3mm, 0.35mm, 0.4mm, 0.45mm, 0.5mm, 0.55mm, 0.6mm, 0.65mm, 0.7mm, 0.75mm, 0.8mm, 0.85mm, 0.9mm, 0.95mm, 1mm or a range value between any two of them.

When the thickness of the first insulation layer 2 is greater than or equal to 0.15mm, the insulation performance of the first insulation layer 2 can be improved and the risk of insulation failure between the battery cell assembly 20 and the metal strip 1 can be reduced. When the thickness of the first insulation layer 2 is less than or equal to 1mm, the size of the binding member 10 can be reduced, the space occupied by the binding member 10 in the battery cell assembly 20 can be reduced, and the volumetric energy density of the battery device 100 can be improved. Therefore, when the thickness of the first insulation layer 2 is 0.15mm-1mm, the improvement of the insulation performance of the first insulation layer 2 and the reduction of the size of the binding member 10 can be balanced, thereby reducing the risk of insulation failure between the battery cell assembly 20 and the metal strip 1 and improving the volumetric energy density of the battery device 100. In addition, when the thickness of the first insulation layer 2 is less than or equal to 1mm, the risk of cracking of the first insulation layer 2 when the binding member 10 is bent can be reduced, thereby reducing the risk of insulation failure between the battery cell assembly 20 and the metal strip 1.

In some embodiments, the thickness of the first insulation layer 2 is 0.15mm-0.5mm.

H may be a point value of any one of 0.15mm, 0.2mm, 0.21mm, 0.22mm, 0.23mm, 0.24mm, 0.25mm, 0.26mm, 0.27mm, 0.28mm, 0.29mm, 0.3mm, 0.31mm, 0.32mm, 0.33mm, 0.34mm, 0.35mm, 0.36mm, 0.37mm, 0.38mm, 0.39mm, 0.4mm, 0.41mm, 0.42mm, 0.43mm, 0.44mm, 0.45mm, 0.46mm, 0.47mm, 0.48mm, 0.49mm, 0.5mm or a range value between any two of them.

When the thickness of the first insulation layer 2 is less than or equal to 0.5mm, the size of the binding member 10 can be further reduced, the space occupied by the binding member 10 in the battery cell assembly 20 can be reduced, and the volumetric energy density of the battery device 100 can be improved. Therefore, when the thickness of the first insulation layer 2 is 0.15mm-0.5mm, the insulation performance of the first insulation layer 2 can be further improved and the size of the binding member 10 can be further reduced, thereby further reducing the risk of insulation failure between the battery cell assembly 20 and the metal strip 1 and improving the volumetric energy density of the battery device 100.

In some embodiments, the first insulation layer 2 is bonded to the metal strip 1.

An adhesive layer is further arranged between the first insulation layer 2 and the metal strip 1, and the adhesive layer bonds the first insulation layer 2 and the metal strip 1.

In this embodiment, the connection between the first insulation layer 2 and the metal strip 1 is more stable, which improves the structural stability of the binding member 10.

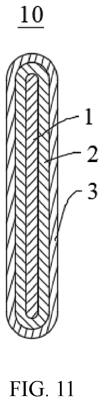

In some embodiments, referring to FIG. 11, FIG. 11 is a schematic structural diagram of a binding member 10 provided by still further embodiments of the present application. The binding member 10 further includes a second insulation layer 3, and the second insulation layer 3 covers at least a part of an outer surface of the first insulation layer 2.

In an embodiment where the first insulation layer 2 is a closed structure extending along the circumferential direction of the metal strip 1 in the cross section, the second insulation layer 3 may cover only a part of the outer surface of the first insulation layer 2; or the second insulation layer 3 may cover the entire outer surface of the first insulation layer 2.

In an embodiment where the first insulation layer 2 forms an opening 22 in the cross section, the second insulation layer 3 may cover only a part of the outer surface of the first insulation layer 2; or the second insulation layer 3 may cover the entire outer surface of the first insulation layer 2; or the second insulation layer 3 may also cover the outer surface of the first insulation layer 2 and the opening 22.

In an embodiment where the first insulation layer 2 is an insulation tape 25, the second insulation layer 3 may cover only a part of the outer surface of the insulation tape 25; or the second insulation layer 3 may cover the entire outer surface of the insulation tape 25; or a part of the metal strip 1 may be exposed from the insulation tape 25, and the second insulation layer 3 covers the part of the metal strip 1 exposed from the insulation tape 25.

In this embodiment, the first insulation layer 2 can further improve the insulation effect between the metal strip 1 and the battery cell assembly 20, and the second insulation layer 3 can also restrain the position of the first insulation layer 2 to improve the structural stability of the first insulation layer 2.

In some embodiments, the second insulation layer 3 is a tubular member, and both the metal strip 1 and the first insulation layer 2 are located inside the tubular member.

The metal strip 1 is located inside the tubular member, and the tubular member covers the entire metal strip 1. The first insulation layer 2 is located inside the tubular member. The first insulation layer 2 may cover the entire metal strip 1, or the first insulation layer 2 may cover only a part of the metal strip 1.

Arranging the second insulation layer 3 as a tubular member is convenient to install the second insulation layer 3 and also helps to fix the first insulation layer 2 on the outer surface of the metal strip 1.

In some embodiments, the second insulation layer 3 is a heat shrinkable tube.

After covering the first insulation layer 2 and the metal strip 1, the second insulation layer 3 can be heated to shrink to stabilize the positions of the first insulation layer 2 and the metal strip 1.

In this embodiment, by arranging the second insulation layer 3 as a heat shrinkable tube, the installation of the second insulation layer 3 is more convenient and the assembly cost of the second insulation layer 3 is reduced.

In some embodiments, the material damage temperature of the first insulation layer 2 is greater than a material damage temperature of the second insulation layer 3.

In this embodiment, the first insulation layer 2 can withstand a higher temperature than the second insulation layer 3. When the second insulation layer 3 is damaged by heat, the first insulation layer 2 can reduce the risk of insulation failure between the battery cell 201 and the metal strip 1 and improve the reliability of the battery device 100.

An embodiment of the present application provides an energy storage apparatus, including the battery cell 201 provided in any one of the above embodiments or the battery device 100 provided in any one of the above embodiments. The battery cell 201 is configured to provide electric energy to the energy storage apparatus.

Still referring to FIG. 3, FIG. 10 and FIG. 11, an embodiment of the present application provides a battery device 100, including a battery cell assembly 20 and a plurality of binding members 10. The battery cell assembly 20 includes a plurality of battery cells 201. The binding members 10 are arranged around the battery cell assembly 20 to bind the plurality of battery cells 201, and the plurality of binding members 10 are spaced apart. The binding member 10 includes a metal strip 1, a first insulation layer 2 and a second insulation layer 3. The first insulation layer 2 covers an entire outer surface of the metal strip 1. The first insulation layer 2 is configured to insulatively separate the metal strip 1 and the battery cells 201. The second insulation layer 3 covers an entire outer surface of the first insulation layer 2. The first insulation layer 2 includes a main body layer 23 and a heat-resistant layer 24 that are stacked, and the heat-resistant layer 24 is arranged on a side of the main body layer 23 facing away from the metal strip 1. A material damage temperature of the first insulation layer 2 is greater than or equal to 250°C. A thickness of the first insulation layer 2 is 0.2mm-0.5mm. The second insulation layer 3 is a heat shrinkable tube.

By arranging the first insulation layer 2 to cover at least the part of the outer surface of the metal strip 1, the first insulation layer 2 can insulate the metal strip 1 and the battery cell assembly 20. When thermal runaway occurs in the battery device 100, the binding member 10 and the battery cells 201 of the battery cell assembly 20 are affected by a sharp high temperature. The first insulation layer 2 can remain insulated from the battery cells 201, thereby reducing the risk that short circuit caused by insulation failure of the battery cells 201 aggravates thermal runaway of the battery device 100. By arranging the material damage temperature of the first insulation layer 2 to be greater than or equal to 250°C, the risk of the first insulation layer 2 melting due to high temperature is reduced, thereby reducing the risk of insulation failure between the metal strip 1 and the battery cell assembly 20, and improving the reliability of the battery device 100. By arranging the first insulation layer 2 as a closed structure extending along the circumferential direction of the metal strip 1, the insulation effect of the first insulation layer 2 on the metal strip 1 can be improved, the risk of insulation failure between the metal strip 1 and other components can be reduced, and the reliability of the battery device 100 can be improved. By arranging the first insulation layer 2 to include the main body layer 23 and heat-resistant layer 24 that are stacked, and arranging the heat-resistant layer 24 on the side of the main body layer 23 facing away from the metal strip 1, the heat-resistant layer 24 can enhance the heat resistance strength of the side of the main body layer 23 facing away from the metal strip 1, and reduce the risk of the first insulation layer 2 being damaged by high temperature from the battery cell assembly 20, thereby reducing the risk of insulation failure between the metal strip 1 and the battery cell assembly 20. When the thickness of the first insulation layer 2 is 0.2mm-0.5mm, the insulation performance of the first insulation layer 2 can be further improved and the size of the binding member 10 can be further reduced, thereby further reducing the risk of insulation failure between the battery cell assembly 20 and the metal strip 1 and improving the volumetric energy density of the battery device 100.

Although the present application has been described with reference to preferred embodiments, various modifications may be made and equivalents may be substituted for the components thereof without departing from the scope of the present application. In particular, the technical features mentioned in the various embodiments may be combined in any manner as long as there is no structural conflict. The present application is not limited to the specific embodiments disclosed herein, but includes all technical solutions falling within the scope of the claims.

## Claims

1. A battery device, comprising:
a battery cell assembly comprising a plurality of battery cells;
a binding member arranged around the battery cell assembly to bind the plurality of battery cells, wherein the binding member comprises a metal strip and a first insulation layer, the first insulation layer covers at least a part of an outer surface of the metal strip, and the first insulation layer is configured to insulatively separate the metal strip and the battery cells; wherein
a material damage temperature of the first insulation layer is greater than or equal to 250°C.

2. The battery device according to claim 1, wherein in a cross section of the binding member, the first insulation layer is a non-closed structure extending along a circumferential direction of the metal strip, and the cross section is perpendicular to an extension direction of the binding member.

3. The battery device according to claim 2, wherein in the cross section of the binding member, an opening is formed between two ends of the first insulation layer, and the opening is located on a side of the metal strip facing away from the battery cell assembly.

4. The battery device according to claim 1, wherein in a cross section of the binding member, the first insulation layer is a closed structure extending along a circumferential direction of the metal strip, and the cross section is perpendicular to an extension direction of the binding member.

5. The battery device according to any one of claims 1 to 4, wherein the metal strip has a first surface facing towards the battery cell assembly, the first insulation layer covers a portion of the first surface opposite to the battery cell, the metal strip has a first end and a second end opposite to each other along a width direction of the metal strip, and along the width direction of the metal strip, the first insulation layer exceeds the first end and the second end.

6. The battery device according to claim 5, wherein the metal strip has a second surface facing away from the battery cell assembly; and
the first insulation layer has two end portions arranged opposite to each other along the width direction of the metal strip, and both of the two end portions are located on the second surface.

7. The battery device according to claim 1, wherein the first insulation layer is an insulation tape wound on the metal strip.

8. The battery device according to any one of claims 1 to 7, wherein a positive electrode active material of a positive electrode sheet of the battery cell comprises lithium iron phosphate, and a material damage temperature of the first insulation layer is 250°C-500°C.

9. The battery device according to any one of claims 1 to 7, wherein a positive electrode active material of a positive electrode sheet of the battery cell comprises LiₐNi_{b}Co_{c}M_{d}OₑA_{f}, wherein 0<a≤1.2; 0<b<1; 0<c<1; 0<d<1; 1≤e≤2; 0≤f≤1; M comprises but is not limited to one or more of Mn, Al, Zr, Zn, Cu, Cr, Mg, Fe, V, Ti and B; A comprises but is not limited to one or more of N, F, S and Cl; and a material damage temperature of the first insulation layer is greater than or equal to 400°C.

10. The battery device according to any one of claims 1 to 7, wherein a material of the first insulation layer is at least one of ceramic, mica, polyimide and polytetrafluoroethylene.

11. The battery device according to any one of claims 1 to 10, wherein the first insulation layer comprises a main body layer and a heat-resistant layer that are stacked; and
the heat-resistant layer is arranged on a side of the main body layer facing away from the metal strip; and/or the heat-resistant layer is arranged on a side of the main body layer facing towards the metal strip.

12. The battery device according to claim 11, wherein a material of the heat-resistant layer is ceramic silicone rubber; and/or a material of the main body layer is glass fiber cloth.

13. The battery device according to any one of claims 1 to 12, wherein a thickness of the first insulation layer is 0.15mm-1mm.

14. The battery device according to claim 13, wherein the thickness of the first insulation layer is 0.15mm-0.5mm.

15. The battery device according to any one of claims 1 to 14, wherein the first insulation layer is bonded to the metal strip.

16. The battery device according to any one of claims 1 to 15, wherein the binding member further comprises a second insulation layer, and the second insulation layer covers at least a part of an outer surface of the first insulation layer.

17. The battery device according to claim 16, wherein the second insulation layer is a tubular member, and both the metal strip and the first insulation layer are located inside the tubular member.

18. The battery device according to claim 17, wherein the second insulation layer is a heat shrinkable tube.

19. The battery device according to any one of claims 16 to 18, wherein the material damage temperature of the first insulation layer is greater than a material damage temperature of the second insulation layer.

20. An energy storage apparatus, comprising the battery device according to any one of claims 1 to 19.
